# EUROPEAN PATENT APPLICATION

(11) **EP 4 589 960 A1**
(43) Date of publication of application: **23.07.2025**
(21) Application number: 23884502.8
(22) Date of filing: 21.09.2023
(51) Int. Cl.: H04N 21/43, H04N 21/8547

(54) **SCREEN PROJECTION METHOD AND APPARATUS**

(30) Priority: 31.10.2022 CN 202211344207
(71) Applicant: Huawei Technologies Co., Ltd., Shenzhen, Guangdong 518129 (CN)
(72) Inventor: LI, Wenxiang, Shenzhen, Guangdong 518129 (CN); LI, Xiaoge, Shenzhen, Guangdong 518129 (CN); DONG, Xing, Shenzhen, Guangdong 518129 (CN)
(74) Representative: Goddar, Heinz J.
(86) International application number: PCT/CN2023/120458
(87) International publication number: WO 2024/093570

(57) **Abstract**

A projection method and apparatus are provided, to resolve a problem in the conventional technology that a sink terminal cannot implement audio-video synchronization when a time stamp of an audio frame and/or a time stamp of a video frame are/is inaccurate. In this application, the method includes: The sink terminal decodes a video frame in a video queue and an audio frame in an audio queue based on a video interval and/or the video interval; and the sink terminal plays a decoded video frame and a decoded audio frame. A quantity of video frames that are from a source terminal and that are buffered in the video queue is maintained within the video interval, and a quantity of audio frames that are from the source terminal and that are buffered in the audio queue is maintained within the audio interval. The audio interval is determined based on the video interval and delay information, or the video interval is determined based on the audio interval and delay information. The delay information is determined based on a video delay and an audio delay. The video delay is a difference between times at which the source terminal and the sink terminal play a same video frame, and the audio delay is a difference between times at which the source terminal and the sink terminal play a same audio frame.

## Description

### CROSS-REFERENCE TO RELATED APPLICATIONS

This application claims priority to Chinese Patent Application No. 202211344207.1, filed with the China National Intellectual Property Administration on October 31, 2022, and entitled "PROJECTION METHOD AND APPARATUS", which is incorporated herein by reference in its entirety.

### TECHNICAL FIELD

This application relates to the computer field, and in particular, to a projection method and apparatus.

### BACKGROUND

Projection is also referred to as screen synchronization, screen flying, screen sharing, or the like. Specifically, audio and a video of a source terminal (for example, a mobile phone, a tablet, a notebook computer, or a computer) is projected to a sink terminal (for example, a tablet, a notebook computer, a computer, a television, an all-in-one machine, or a projector). Projection is mainly used in life scenarios such as movie watching, game playing, and video chatting, which greatly enriches life experience of people.

Audio-video synchronization is an important indicator for measuring projection effect. Audio-video synchronization means that each frame of image being rendered at the sink terminal strictly corresponds to each segment of sound being played, and there is no deviation that can be distinguished by human ears and naked eyes. Usually, the source terminal intercepts an audio stream being played by the source terminal to obtain an audio frame, packs the audio frame and a time stamp (for example, a presentation time stamp (presentation time stamp, PTS)) of the audio frame into a real-time transport protocol (real-time transport protocol, RTP) packet, and sends the real-time transport protocol packet to the sink terminal. Similarly, the source terminal intercepts a video stream being played by the source terminal to obtain a video frame, packs the video frame and a time stamp of the video frame into an RTP packet, and sends the RTP packet to the sink terminal. For the sink terminal, the sink terminal adjusts start playing moments of the audio frame and the video frame based on the audio frame and the time stamp of the audio frame, and the video frame and the time stamp of the video frame, to implement audio-video synchronization.

However, when the time stamp of the audio frame and/or the time stamp of the video frame are/is inaccurate, the sink terminal cannot implement audio-video synchronization.

### SUMMARY

This application provides a projection method and apparatus, so that a sink terminal implements audio-video synchronization without depending on a time stamp marked by a source terminal.

According to a first aspect, this application provides a projection method. The projection method is applied to a scenario in which a source terminal projects a video frame and an audio frame to a sink terminal. The source terminal is, for example, a mobile phone, a tablet, a notebook computer, or a computer, and the sink terminal is, for example, a large screen, a tablet, a notebook computer, a television, an all-in-one machine, a projector, augmented reality (augmented reality, AR), or virtual reality (virtual reality, VR).

The projection method includes: The sink terminal decodes a video frame in a video queue and an audio frame in an audio queue based on a video interval and/or the video interval, for a decoded video frame and a decoded audio frame for playing to meet an audio-video synchronization condition; and the sink terminal plays the decoded video frame and the decoded audio frame. A quantity of video frames that are from the source terminal and that are buffered in the video queue is maintained within the video interval, and a quantity of audio frames that are from the source terminal and that are buffered in the audio queue is maintained within the audio interval. The audio interval is determined based on the video interval and delay information, or the video interval is determined based on the audio interval and delay information. The delay information is determined based on a video delay and an audio delay. The video delay is a difference between times at which the source terminal and the sink terminal play a same video frame, and the audio delay is a difference between times at which the source terminal and the sink terminal play a same audio frame.

In a possible implementation, that the sink terminal decodes the video frame in the video queue and the audio frame in the audio queue may be specifically as follows: The sink terminal obtains a video frame from a head of the video queue as a target video frame, the sink terminal obtains an audio frame from a head of the audio queue as a target audio frame, and the sink terminal decodes the target video frame and the target audio frame. Correspondingly, that the sink terminal plays the decoded video frame and the decoded audio frame may be specifically that the sink terminal plays a decoded target video frame and a decoded target audio frame. The decoded target video frame and the decoded target audio frame that are played by the sink terminal meet the audio-video synchronization condition.

In the foregoing technical solution, without depending on a time stamp marked by the source terminal, the sink terminal can implement audio-video synchronization by buffering, in the video queue, video frames whose quantity meets the video interval, and buffering, in the audio queue, audio frames whose quantity meets the audio interval, to help improve flexibility and accuracy of implementing audio-video synchronization.

In addition, a video frame is buffered in the video queue at the sink terminal, and an audio frame is buffered in the audio queue, which helps to play audio and a video more smoothly and avoid a frame freezing problem.

In a possible implementation, the sink terminal may further control a decoding speed of the video frame, for a quantity of video frames in the video queue to be maintained within the video interval; and/or the sink terminal may further control a decoding speed of the audio frame, for a quantity of audio frames in the audio queue to be maintained within the audio interval. In this way, it is ensured that a quantity of video frames that are buffered in the video queue meets the video interval, and a quantity of audio frames that are buffered in the audio queue meets the audio interval.

In a possible implementation, the audio interval is determined based on the video interval and the delay information. In this way, the sink terminal sequentially decodes each video frame in the video queue, which helps ensure that a video played by the sink terminal is smoother. In addition, when the sink terminal adjusts a quantity of audio frames in the audio queue, an adjustment granularity is small, which helps implement better audio-video effect.

In a possible example, if determining that the quantity of video frames in the video queue meets a first preset condition, the sink terminal reduces the decoding speed of the video frame; and/or if determining that the quantity of video frames in the video queue meets a second preset condition, the sink terminal increases the decoding speed of the video frame. Optionally, the first preset condition is that the quantity of video frames in the video queue is less than a minimum value of the video interval, or the quantity of video frames in the video queue is less than or equal to a minimum value of the video interval; and/or the second preset condition is that the quantity of video frames in the video queue is greater than a maximum value of the video interval, or the quantity of video frames in the video queue is greater than or equal to a maximum value of the video interval.

In a possible example, if determining that the quantity of audio frames in the audio queue meets a third preset condition, the sink terminal reduces the decoding speed of the audio frame, or temporarily stops decoding the audio frame; and/or if determining that the quantity of audio frames in the audio queue meets a fourth preset condition, the sink terminal increases the decoding speed of the audio frame, or discards one or more audio frames in the audio queue. Optionally, the third preset condition is that the quantity of audio frames in the audio queue is less than a minimum value of the audio interval, or the quantity of audio frames in the audio queue is less than or equal to a minimum value of the audio interval; and/or the fourth preset condition is that the quantity of audio frames in the audio queue is greater than a maximum value of the audio interval, or the quantity of audio frames in the audio queue is greater than or equal to a maximum value of the audio interval.

In a possible example, that the sink terminal determines the audio interval based on the video interval and the delay information may be specifically that the sink terminal determines the audio interval based on a fluctuation range of a difference between the maximum value and the minimum value of the video interval, duration of an interval between two adjacent video frames, duration of an interval between two adjacent audio frames, and the delay information.

In a possible example, the sink terminal determines the audio interval according to a relational expression queue₂=(|delay₁-delay₂|+δ₁T₁)/T₂. queue₂ is the audio interval, that is, a range of a quantity of audio frames in the audio queue; delay₁ is the video delay; delay₂ is the audio delay; and δ₁ is the difference between the maximum value (denoted as max₁) and the minimum value (denoted as min₁) of the video interval. Optionally, δ₁ is a value that dynamically changes. For example, a fluctuation range of d₁ changes based on max₁ and/or min₁, T₁ is the duration of the interval between two adjacent video frames, and T₂ is the duration of the interval between two adjacent audio frames.

In a possible example, the audio-video synchronization condition includes that a difference between start playing moments of an audio frame and a video frame that are synchronously played at the source terminal and that are separately played at the sink terminal is less than a first threshold. The first threshold is determined based on the duration of the interval between two adjacent video frames. For example, the first threshold is equal to a product of T₁ and δ₁.

In a possible implementation, the video interval is determined based on the audio interval and the delay information. In this way, the sink terminal sequentially performs audio decoding on each audio frame in the audio queue, which helps implement continuity of audio played by the sink terminal.

In a possible example, if determining that the quantity of video frames in the video queue meets a first preset condition, the sink terminal reduces the decoding speed of the video frame, or temporarily stops decoding the video frame; and/or if determining that the quantity of video frames in the video queue meets a second preset condition, the sink terminal increases the decoding speed of the video frame, or discards one or more video frames in the video queue. Optionally, the first preset condition is that the quantity of video frames in the video queue is less than a minimum value of the video interval, or the quantity of video frames in the video queue is less than or equal to a minimum value of the video interval; and/or the second preset condition is that the quantity of video frames in the video queue is greater than a maximum value of the video interval, or the quantity of video frames in the video queue is greater than or equal to a maximum value of the video interval.

In a possible example, if determining that the quantity of audio frames in the audio queue meets a third preset condition, the sink terminal reduces the decoding speed of the audio frame; and/or if determining that the quantity of audio frames in the audio queue meets a fourth preset condition, the sink terminal increases the decoding speed of the audio frame. Optionally, the third preset condition is that the quantity of audio frames in the audio queue is less than a minimum value of the audio interval, or the quantity of audio frames in the audio queue is less than or equal to a minimum value of the audio interval; and/or the fourth preset condition is that the quantity of audio frames in the audio queue is greater than a maximum value of the audio interval, or the quantity of audio frames in the audio queue is greater than or equal to a maximum value of the audio interval.

In a possible example, that the sink terminal determines the video interval based on the audio interval and the delay information may be specifically that the sink terminal determines the video interval based on a fluctuation range of a difference between the maximum value and the minimum value of the audio interval, duration of an interval between two adjacent video frames, duration of an interval between two adjacent audio frames, and the delay information.

In a possible example, the sink terminal determines the video interval according to a relational expression queue₁=(|delay₁-delay₂|+δ₂T₂)/T₁. queue₁ is the video interval, that is, a range of a quantity of video frames in the video queue; delay₁ is the video delay; delay₂ is the audio delay; and δ₂ is the difference between the maximum value (denoted as max₂) and the minimum value (denoted as min₂) of the audio interval. Optionally, δ₂ is a value that dynamically changes. For example, a fluctuation range of δ₂ changes based on max₂ and/or min₂, T₁ is the duration of the interval between two adjacent video frames, and T₂ is the duration of the interval between two adjacent audio frames.

In a possible example, the audio-video synchronization condition includes that a difference between start playing moments of an audio frame and a video frame that are synchronously played at the source terminal and that are separately played at the sink terminal is less than a second threshold. The second threshold is determined based on the duration of the interval between two adjacent audio frames. For example, the second threshold is equal to a product of T₂ and δ₂.

In a possible implementation, before decoding the video frame in the video queue and the audio frame in the audio queue based on the video interval and/or the video interval, the sink terminal further collects the video delay and the audio delay, and uses a difference between the video delay and the audio delay as the delay information. In this way, the sink terminal can obtain accurate delay information, thereby implementing better audio-video synchronization effect.

According to a second aspect, this application provides a projection apparatus. The projection apparatus is used for a scenario in which a source terminal projects a video frame and an audio frame to a sink terminal, and the sink terminal includes the projection apparatus.

The projection apparatus includes: a decoding module, configured to decode a video frame in a video queue and an audio frame in an audio queue based on a video interval and/or the video interval, for a decoded video frame and a decoded audio frame for playing to meet an audio-video synchronization condition; and a playing module, configured to play the decoded video frame and the decoded audio frame. A quantity of video frames that are from the source terminal and that are buffered in the video queue is maintained within the video interval, and a quantity of audio frames that are from the source terminal and that are buffered in the audio queue is maintained within the audio interval. The audio interval is determined based on the video interval and delay information, or the video interval is determined based on the audio interval and delay information. The delay information is determined based on a video delay and an audio delay. The video delay is a difference between times at which the source terminal and the sink terminal play a same audio frame.

In a possible implementation, when decoding the video frame in the video queue and the audio frame in the audio queue, the decoding module is specifically configured to: obtain a video frame from a head of the video queue as a target video frame, obtain an audio frame from a head of the audio queue as a target audio frame, and decode the target video frame and the target audio frame. Correspondingly, when playing the decoded video frame and the decoded audio frame, the playing module is specifically configured to play a decoded target video frame and a decoded target audio frame. The decoded target video frame and the decoded target audio frame that are played by the playing module meet the audio-video synchronization condition.

In a possible implementation, the projection apparatus further includes a control module. The control module is configured to: control a decoding speed of the video frame, for a quantity of video frames in the video queue to be maintained within the video interval; and/or control a decoding speed of the audio frame, for a quantity of audio frames in the audio queue to be maintained within the audio interval.

In a possible implementation, the audio interval is determined based on the video interval and the delay information.

In a possible example, if determining that the quantity of video frames in the video queue meets a first preset condition, the control module reduces the decoding speed of the video frame; and/or if determining that the quantity of video frames in the video queue meets a second preset condition, the control module increases the decoding speed of the video frame. Optionally, the first preset condition is that the quantity of video frames in the video queue is less than a minimum value of the video interval, or the quantity of video frames in the video queue is less than or equal to a minimum value of the video interval; and/or the second preset condition is that the quantity of video frames in the video queue is greater than a maximum value of the video interval, or the quantity of video frames in the video queue is greater than or equal to a maximum value of the video interval.

In a possible example, if determining that the quantity of audio frames in the audio queue meets a third preset condition, the control module reduces the decoding speed of the audio frame, or temporarily stops decoding the audio frame; and/or if determining that the quantity of audio frames in the audio queue meets a fourth preset condition, the control module increases the decoding speed of the audio frame, or discards one or more audio frames in the audio queue. Optionally, the third preset condition is that the quantity of audio frames in the audio queue is less than a minimum value of the audio interval, or the quantity of audio frames in the audio queue is less than or equal to a minimum value of the audio interval; and/or the fourth preset condition is that the quantity of audio frames in the audio queue is greater than a maximum value of the audio interval, or the quantity of audio frames in the audio queue is greater than or equal to a maximum value of the audio interval.

In a possible example, the projection apparatus further includes a determining module, and the determining module is configured to determine the audio interval based on the video interval and the delay information. In a possible example, the determining module is specifically configured to determine the audio interval based on a fluctuation range of a difference between the maximum value and the minimum value of the video interval, duration of an interval between two adjacent video frames, duration of an interval between two adjacent audio frames, and the delay information.

In a possible example, the determining module is specifically configured to determine the audio interval according to a relational expression queue₂=(|delay₁-delay₂|+δ₁T₁)/T₂. queue₂ is the audio interval, that is, a range of a quantity of audio frames in the audio queue; delay₁ is the video delay; delay₂ is the audio delay; and δ₁ is the difference between the maximum value (denoted as max₁) and the minimum value (denoted as min₁) of the video interval. Optionally, δ₁ is a value that dynamically changes. For example, a fluctuation range of δ₁ changes based on max₁ and/or min₁, T₁ is the duration of the interval between two adjacent video frames, and T₂ is the duration of the interval between two adjacent audio frames.

In a possible example, the audio-video synchronization condition includes that a difference between start playing moments of an audio frame and a video frame that are synchronously played at the source terminal and that are separately played at the sink terminal is less than a first threshold. The first threshold is determined based on the duration of the interval between two adjacent video frames. For example, the first threshold is equal to a product of T₁ and δ₁.

In a possible implementation, the video interval is determined based on the audio interval and the delay information.

In a possible example, the projection apparatus further includes a control module. The control module is configured to: if it is determined that the quantity of video frames in the video queue meets a first preset condition, reduce the decoding speed of the video frame, or temporarily stop decoding the video frame; and/or if it is determined that the quantity of video frames in the video queue meets a second preset condition, increase the decoding speed of the video frame, or discard one or more video frames in the video queue. Optionally, the first preset condition is that the quantity of video frames in the video queue is less than a minimum value of the video interval, or the quantity of video frames in the video queue is less than or equal to a minimum value of the video interval; and/or the second preset condition is that the quantity of video frames in the video queue is greater than a maximum value of the video interval, or the quantity of video frames in the video queue is greater than or equal to a maximum value of the video interval.

In a possible example, if determining that the quantity of audio frames in the audio queue meets a third preset condition, the control module reduces the decoding speed of the audio frame; and/or if determining that the quantity of audio frames in the audio queue meets a fourth preset condition, the control module increases the decoding speed of the audio frame. Optionally, the third preset condition is that the quantity of audio frames in the audio queue is less than a minimum value of the audio interval, or the quantity of audio frames in the audio queue is less than or equal to a minimum value of the audio interval; and/or the fourth preset condition is that the quantity of audio frames in the audio queue is greater than a maximum value of the audio interval, or the quantity of audio frames in the audio queue is greater than or equal to a maximum value of the audio interval.

In a possible example, the projection apparatus further includes a determining module, and the determining module is configured to determine the video interval based on the audio interval and the delay information. In a possible example, the determining module is specifically configured to determine the video interval based on a fluctuation range of a difference between the maximum value and the minimum value of the audio interval, duration of an interval between two adjacent video frames, duration of an interval between two adjacent audio frames, and the delay information.

In a possible example, the determining module is specifically configured to determine the video interval according to queue₁=(|delay₁-delay₂|+δ₂T₂)/T₁. queue₁ is the video interval, that is, a range of a quantity of video frames in the video queue; delay₁ is the video delay; delay₂ is the audio delay; and δ₂ is the difference between the maximum value (denoted as max₂) and the minimum value (denoted as min₂) of the audio interval. Optionally, δ₂ is a value that dynamically changes. For example, a fluctuation range of δ₂ changes based on max₂ and/or min₂, T₁ is the duration of the interval between two adjacent video frames, and T₂ is the duration of the interval between two adjacent audio frames.

In a possible example, the audio-video synchronization condition includes that a difference between start playing moments of an audio frame and a video frame that are synchronously played at the source terminal and that are separately played at the sink terminal is less than a second threshold. The second threshold is determined based on the duration of the interval between two adjacent audio frames. For example, the second threshold is equal to a product of T₂ and δ₂.

In a possible implementation, the projection apparatus further includes a determining module. Before the decoding module decodes the video frame in the video queue and the audio frame in the audio queue based on the video interval and/or the video interval, the determining module is configured to: collect the video delay and the audio delay; and use a difference between the video delay and the audio delay as the delay information.

According to a third aspect, this application provides a computing device, including a processor and a memory. The memory is configured to store a computer program, and the processor is configured to execute the computer program stored in the memory, so that the computing device is enabled to perform the method in the first aspect or a possible implementation of the first aspect.

According to a fourth aspect, this application provides a computer-readable storage medium. The computer-readable storage medium stores a computer program or instructions. When the computer program or the instructions are executed by a computing device, the computing device performs the method in the first aspect or a possible implementation of the first aspect.

According to a fifth aspect, this application provides a computer program product. The computer program product includes a computer program or instructions. When the computer program or the instructions are executed by a computing device, the computing device performs the method in the first aspect or a possible implementation of the first aspect.

According to a sixth aspect, this application provides a projection system, including a source terminal and a sink terminal. The source terminal is configured to send a video frame and an audio frame to the sink terminal, and the sink terminal is configured to perform the method in the first aspect or a possible implementation of the first aspect.

For technical effect that can be achieved in any one of the second aspect to the sixth aspect, refer to descriptions of beneficial effect in the first aspect. Details are not described herein again.

### BRIEF DESCRIPTION OF DRAWINGS

FIG. 1 is a diagram of an architecture of a projection system;
FIG. 2 is a diagram of a structure of a source terminal;
FIG. 3 is a diagram of a structure of a sink terminal;
FIG. 4 is a diagram of a structure of an electronic device;
FIG. 5 is a diagram of an example of a projection scenario according to this application;
FIG. 6 is a schematic flowchart of determining a video interval and an audio interval by a sink terminal according to this application;
FIG. 7 is a diagram of a relationship between a video delay and an audio delay according to this application;
FIG. 8 is another schematic flowchart of determining a video interval and an audio interval by a sink terminal according to this application;
FIG. 9 is a diagram of adjusting a video decoding speed according to this application;
FIG. 10 is a diagram of adjusting an audio decoding speed according to this application;
FIG. 11 is a schematic flowchart of a projection method according to this application; and
FIG. 12 is a diagram of a structure of a projection apparatus according to this application.

### DESCRIPTION OF EMBODIMENTS

The following describes in detail embodiments of this application with reference to accompanying drawings.

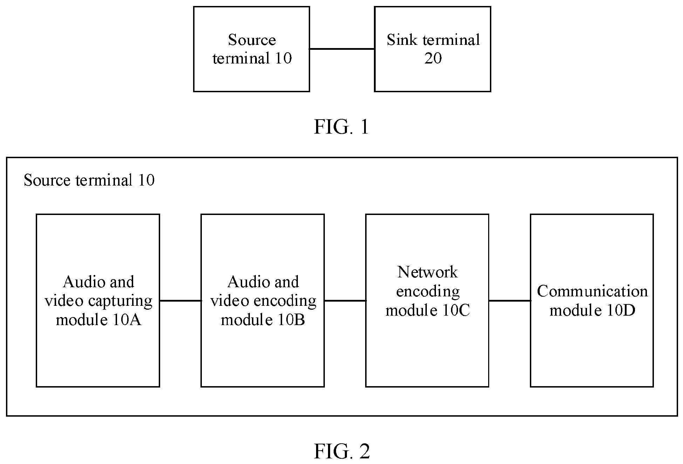

FIG. 1 is a diagram of an architecture of a projection system. The projection system is applicable to life scenarios such as movie watching, game playing, and video chatting. Specifically, the projection system includes a source terminal 10 and a sink terminal 20. The source terminal 10 is configured to project audio and video data that is being played by the source terminal 10 to the sink terminal 20, and the sink terminal 20 is configured to play the audio and video data from the source terminal 10.

The source terminal 10 is, for example, a mobile phone, a tablet, a notebook computer, or a computer.

The sink terminal 20 is, for example, a large screen, a tablet, a notebook computer, a computer, a television, an all-in-one machine, a projector, augmented reality (augmented reality, AR), or virtual reality (virtual reality, VR).

For example, the source terminal 10 or the sink terminal 20 may carry iOS^{®}, Android^{®}, Microsoft^{®}, or another operating system.

Optionally, the source terminal 10 and the sink terminal 20 are connected in a short-distance wireless communication manner. The short-distance wireless communication manner is, for example, a communication manner like Bluetooth or a wireless local area network connection. For example, when the source terminal 10 and the sink terminal 20 are connected through a wireless local area network, specifically, the source terminal 10 and the sink terminal 20 are separately connected to a third-party device according to a wireless fidelity (wireless fidelity, Wi-Fi) protocol. The third-party device is, for example, a router, a gateway, or an intelligent device controller.

FIG. 2 is a diagram of a structure of the source terminal 10. The source terminal 10 includes an audio and video capturing module 10A, an audio and video encoding module 10B, a network encoding module 10C, and a communication module 10D.

For example, functions of the modules in the source terminal 10 are as follows.

The audio and video capturing module 10A is configured to collect a video frame in a video stream currently played by the source terminal 10, and collect an audio frame in an audio stream currently played by the source terminal 10.

The audio and video encoding module 10B is configured to perform video encoding on the collected video frame, and perform audio encoding on the collected audio frame. For example, the audio and video encoding module 10B performs video encoding according to the H.264 coding protocol.

The network encoding module 10C is configured to generate, based on a network protocol and a video frame obtained through video encoding, a to-be-sent video packet corresponding to the network protocol. For example, the network protocol is a real-time transport protocol (real-time transport protocol, RTP), that is, the network encoding module 10C is configured to generate a to-be-sent RTP video packet. The RTP video packet carries the video frame obtained through video encoding. An implementation in which the network encoding module 10C generates a to-be-sent audio packet is similar to the foregoing implementation in which the network encoding module 10C generates the to-be-sent video packet, and details are not described again.

The communication module 10D is configured to send the to-be-sent packets (including the video packet and the audio packet) generated by the network encoding module 10C to the sink terminal 20. The communication module 10D is, for example, a Wi-Fi module or a Bluetooth module.

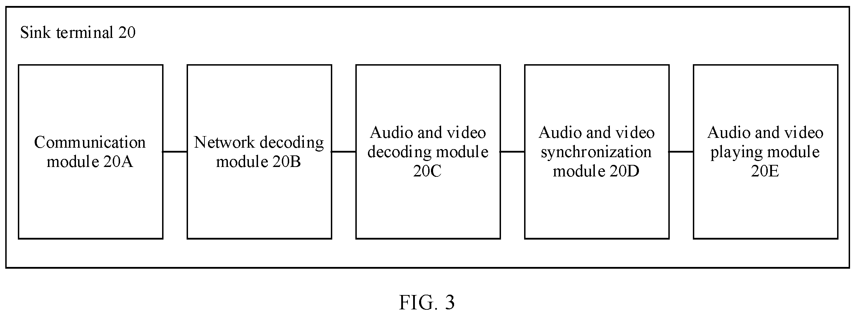

FIG. 3 is a diagram of a structure of the sink terminal 20. The sink terminal 20 includes a communication module 20A, a network decoding module 20B, an audio and video decoding module 20C, an audio and video synchronization module 20D, and an audio and video playing module 20E.

For example, functions of the modules in the sink terminal 20 are as follows.

The communication module 20A is configured to receive a packet (including a video packet and an audio packet) from the source terminal 10. For example, when the communication module 10D is the Wi-Fi module, the communication module 20A is also a Wi-Fi module. When the communication module 10D is the Bluetooth module, the communication module 20A is also a Bluetooth module.

The network decoding module 20B is configured to decode a video packet according to a network protocol, to obtain a video frame obtained through video encoding from the video packet. For example, the network protocol is an RTP, that is, the network decoding module 20B is configured to decode an RTP video packet, and obtain a video frame obtained through video encoding from the RTP video packet. An implementation in which the network decoding module 20B obtains, according to the network protocol, an audio frame obtained through video encoding from the audio packet is similar to the foregoing implementation in which the video frame obtained through video encoding is obtained, and details are not described again.

The audio and video decoding module 20C is configured to perform video decoding on the video frame obtained through video encoding to obtain a video frame, and perform audio decoding on the audio frame obtained through audio encoding to obtain an audio frame.

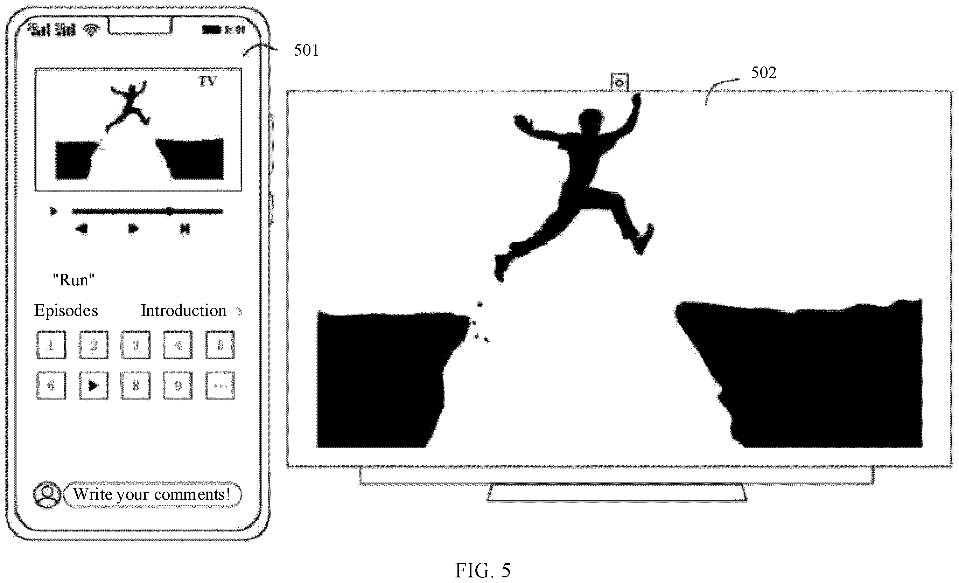

The audio and video synchronization module 20D is configured to synchronize a to-be-played audio frame and a to-be-played video frame. For example, the audio and video synchronization module 20D synchronizes the audio frame and the video frame based on a time stamp of the audio frame and a time stamp of the video frame. For specific descriptions, refer to descriptions in an embodiment related to FIG. 5.

The audio and video playing module 20E is configured to play the video frame and the video frame.

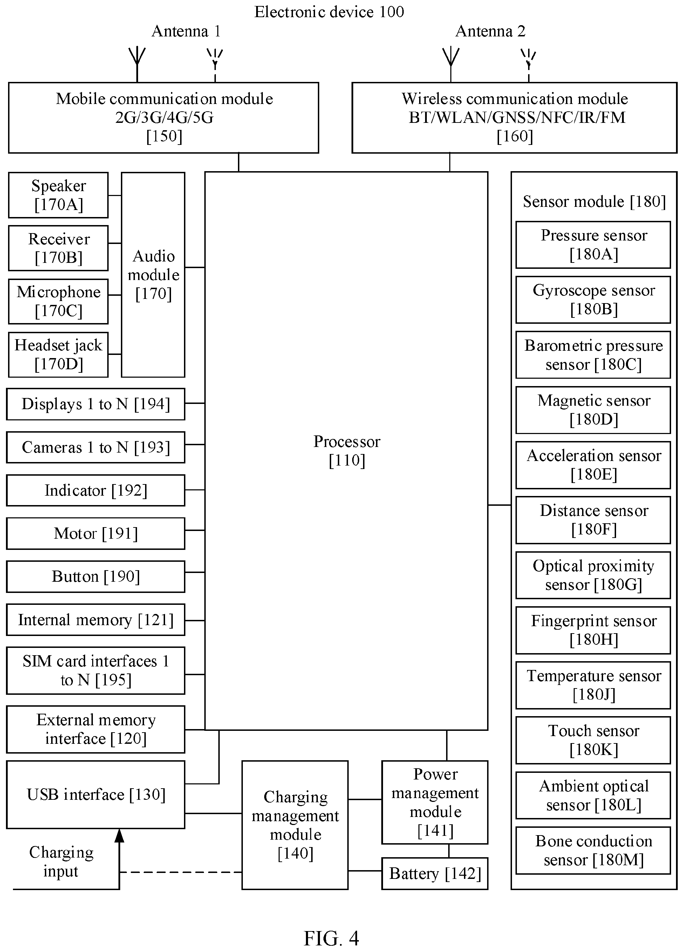

FIG. 4 is a diagram of a structure of an electronic device 100. The electronic device 100 may be the source terminal 10 in FIG. 1 or FIG. 2, or may be the sink terminal 20 in FIG. 1 or FIG. 3.

It should be understood that the electronic device 100 shown in the figure is merely an example, and the electronic device 100 may have more or fewer components than those shown in FIG. 4, or a combination of two or more components, or an arrangement of different components. The various components shown in FIG. 4 may be implemented in hardware including one or more signal processing circuits and/or application-specific integrated circuits, software, or a combination of hardware and software.

As shown in FIG. 4, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient optical sensor 180L, a bone conduction sensor 180M, and the like.

For example, when the electronic device 100 is the sink terminal 20 in FIG. 1 or FIG. 3, the communication module 20A includes the antenna 2 and the wireless communication module 160; the network decoding module 20B, the audio and video decoding module 20C, and the audio and video synchronization module 20D may be integrated into the processor 110; and the audio and video playing module 20E includes the display 194.

The following describes components in the electronic device 100 by using an example with reference to FIG. 4.

The processor 110 may include one or more processing units, for example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor 110 may directly invoke the instructions or the data from the memory. This avoids repeated access and reduces waiting time of the processor 110, thereby improving efficiency of a system.

The processor 110 may perform a projection method provided in embodiments of this application. Specifically, the processor 110 may be configured to control a decoding speed of a video frame, and perform decoding processing on the video frame; and/or configured to control a decoding speed of the audio frame, perform decoding processing on the audio frame, and the like. When different components are integrated into the processor 110, for example, a CPU and a GPU are integrated, the CPU and the GPU may cooperate to perform the projection method provided in embodiments of this application. For example, in the projection method, some algorithms are performed by the CPU, and the other algorithms are performed by the GPU, to obtain fast processing efficiency.

In some embodiments, the processor 110 may include one or more interfaces. For example, the interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface, and the like. It may be understood that an interface connection relationship between modules illustrated in embodiments of this application is merely an illustrative description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device via the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor a parameter like a battery capacity, a battery cycle count, or a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may receive an electromagnetic wave through the antenna 1, perform processing like filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like.

The external memory interface 120 may be configured to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store data (for example, audio data) created when the electronic device 100 is used, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 runs the instructions stored in the internal memory 121 and/or the instructions stored in the memory disposed in the processor, to implement various functional applications and data processing of the electronic device 100.

The electronic device 100 may implement an audio function, for example, music playing and recording, through the audio module 170, the speaker 170A, the receiver 170B, the microphone 170C, the headset jack 170D, the application processor, and the like. For example, the audio module 170 is configured to convert digital audio information into an analog audio signal for output, and is also configured to convert analog audio input into a digital audio signal. The audio module 170 may be further configured to encode and decode an audio signal. The speaker 170A, also referred to as a "loudspeaker", is configured to convert an audio electrical signal into a sound signal. The electronic device 100 may listen to music or answer a hands-free call via the speaker 170A. The receiver 170B is configured to convert an audio electrical signal into a sound signal. When a call is answered or voice information is received via the electronic device 100, the receiver 170B may be put close to a human ear to listen to a voice. The microphone 170C is configured to convert the sound signal into an electrical signal. The headset jack 170D is configured to connect to a wired headset.

With reference to FIG. 1 to FIG. 4, FIG. 5 is a diagram of an example of a projection scenario according to this application. The source terminal 10 is specifically a mobile phone 501, and the sink terminal 20 is specifically a television 502. For example, if a user wants to watch a seventh episode of the TV series "Run", the user plays the seventh episode of the TV series "Run" in a video application of the mobile phone. Then, the user taps a projection button (a "TV" button in an upper right corner of a video interface in FIG. 5) on a display interface of the mobile phone 501. The mobile phone 501 initiates a projection connection request to the television 502 in response to the user instruction. The mobile phone 501 and the television 502 are connected to a same router. Therefore, the television 502 receives the projection connection request of the mobile phone 501, and establishes a projection connection to the mobile phone 501. In this way, the mobile phone 501 can project content displayed on the mobile phone 501 to the television 502, that is, content displayed on the television 502 is consistent with the content displayed on the mobile phone 501, and sound played on the television 502 is consistent with sound played on the mobile phone 501.

In the projection scenario, audio-video synchronization is an important indicator for measuring projection effect. Audio-video synchronization means that each frame of image being rendered at the sink terminal strictly corresponds to each segment of sound being played, and there is no deviation that can be distinguished by human ears and naked eyes. In a possible manner, when the audio and video capturing module 10A in the source terminal intercepts an audio frame from an audio stream being played by the source terminal, the audio and video capturing module 10A further determines a time stamp of the audio frame, packs the audio frame and the time stamp of the audio frame into an RTP packet, and sends the RTP packet to the sink terminal. Similarly, when the audio and video capturing module 10A in the source terminal intercepts a video frame from a video stream being played by the source terminal, the audio and video capturing module 10A further determines a time stamp of the video frame, packs the video frame and the time stamp of the video frame into an RTP packet, and sends the RTP packet to the sink terminal. For the sink terminal, the sink terminal adjusts start playing moments of the audio frame and the video frame based on the audio frame and the time stamp of the audio frame, and the video frame and the time stamp of the video frame, to implement audio-video synchronization.

However, manners/algorithms for determining time stamps by source terminals of different vendors are different. In this way, time stamps determined by source terminals of different vendors are different, that is, the time stamps may be inaccurate, and the sink terminal cannot perform audio-video synchronization based on the inaccurate time stamps. As a result, effect of audio-video synchronization is poor.

In view of the foregoing problem, this application provides a projection method. The projection method may be used by a sink terminal to implement audio-video synchronization without depending on a time stamp.

It should be noted in advance that the sink terminal locally maintains a video queue and an audio queue.

One or more video frames from a source terminal are buffered in the video queue. It may be understood that when the sink terminal receives a video frame from the source terminal, the sink terminal may buffer the video frame to a tail of the video queue. In addition, the sink terminal may further obtain a video frame from a head of the video queue, and decode and play the obtained video frame.

One or more audio frames from the source terminal are buffered in the audio queue. It may be understood that when the sink terminal receives an audio frame from the source terminal, the sink terminal may buffer the audio frame to a tail of the audio queue. In addition, the sink terminal may further obtain an audio frame from a head of the audio queue, and decode and play the obtained audio frame.

The video queue is used as an example for description. The sink terminal buffers 10 video frames in the video queue. Specifically, from the head of the video queue to the tail of the video queue, a video frame 20 to a video frame 30 are sequentially buffered. When the sink terminal receives a video frame 31 from the source terminal again, the sink terminal places the video frame 31 following the video frame 30. In addition, the sink terminal may further obtain the video frame 20, and decode and play the video frame 20. The audio frame is similar to the video frame, and details are not described again.

In this application, the sink terminal maintains a quantity of video frames buffered in the video queue (that is, a length of the video queue) in a video interval, and maintains a quantity of audio frames buffered in the audio queue (that is, a length of the audio queue) in an audio interval, so that when playing a video frame, the sink terminal can exactly play an audio frame corresponding to the video frame, to implement audio-video synchronization.

There is an association relationship between the video interval, the audio interval, and delay information. The following provides two possible implementations.

In a first possible manner, the audio interval is determined based on the video interval and the delay information.

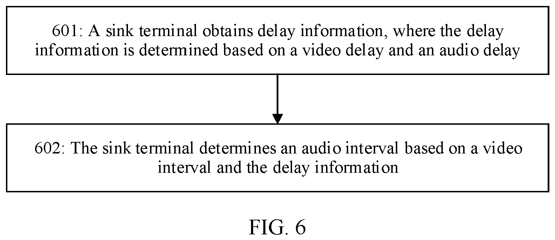

It may be considered that the sink terminal presets the video interval, and then the sink terminal determines the audio interval based on the video interval and the delay information. For a specific implementation, refer to a flowchart shown in FIG. 6 as an example.

Step 601: The sink terminal obtains the delay information. The delay information is specifically determined based on a video delay and an audio delay.

The video delay is a difference between times at which the source terminal and the sink terminal play a same video frame. For example, if a moment at which the source terminal plays a 1^{st} video frame is the 1^{st} ms, and a moment at which the sink terminal plays the same 1^{st} video frame is the 101^{st} ms, a video delay is 100 ms. Similarly, the audio delay is a difference between times at which the source terminal and the sink terminal play a same audio frame. For example, if a moment at which the source terminal plays a 1^{st} audio frame is the 2^{nd} ms, and a moment at which the sink terminal plays the same 1^{st} audio frame is the 22^{nd} ms, an audio delay is 20 ms.

With reference to the diagram of the structure of the source terminal 10 shown in FIG. 2 and the diagram of the structure of the sink terminal 20 shown in FIG. 3, the following uses a video as an example to explain a reason why a delay (that is, the video delay) exists. In a process in which the source terminal projects audio and a video to the sink terminal, the source terminal needs to collect a video frame, perform video encoding on the collected video frame, and then perform network encoding on a video frame obtained through video encoding to obtain a to-be-transmitted packet, and transmits the to-be-transmitted packet to the sink terminal. Correspondingly, the sink terminal needs to receive the packet, perform network decoding on the received packet to obtain the video frame obtained through video encoding, and then perform video decoding on the video frame obtained through video encoding to obtain the video frame. In this way, when the source terminal and the sink terminal play a same frame of video, at least a processing delay and a transmission delay (for example, a Wi-Fi transmission delay) at the source terminal and a processing delay at the sink terminal exist. Further, a reason for existence of the audio delay is similar to a reason for existence of the video frame, and details are not described again.

Optionally, the video delay is greater than the audio delay. The delay information may be specifically a difference between the video delay and the audio delay. For example, if the video delay is 100 ms and the audio delay is 20 ms, the delay information is 80 ms.

In a possible example, the sink terminal measures the video delay and the audio delay, and uses the difference between the video delay and the audio delay as the delay information. In another possible example, the sink terminal directly obtains the difference between the video delay and the audio delay through measurement, and uses the difference as the delay information. In still another possible example, the delay information is preset in the sink terminal, and the delay information is, for example, 80 ms. It is explained as follows: A channel for transmitting a video frame between the source terminal and the sink terminal is the same as a channel for transmitting an audio frame between the source terminal and the sink terminal, and a transmission delay in the video delay is the same as a transmission delay in the audio delay. Therefore, the delay information mainly depends on a processing delay of the video frame at the source terminal and a processing delay of the video frame at the sink terminal, and a processing delay of the audio frame at the source terminal and a processing delay of the audio frame at the sink terminal. The two processing delays may be measured in advance, and then the delay information is determined based on the two processing delays measured in advance, and the delay information is configured in the sink terminal.

Step 602: The sink terminal determines the audio interval based on the video interval and the delay information.

In a possible implementation, the sink terminal determines the audio interval based on a fluctuation range of a difference between a maximum value and a minimum value of the video interval, duration of an interval between two adj acent video frames, duration of an interval between two adjacent audio frames, and the delay information. The duration of the interval between the two adjacent video frames is a sampling interval of the source terminal for the video frame, for example, T1 is 33 ms. The duration of the interval between the two adjacent audio frames is a sampling interval of the source terminal for the audio frame, for example, T2 is 10 ms.

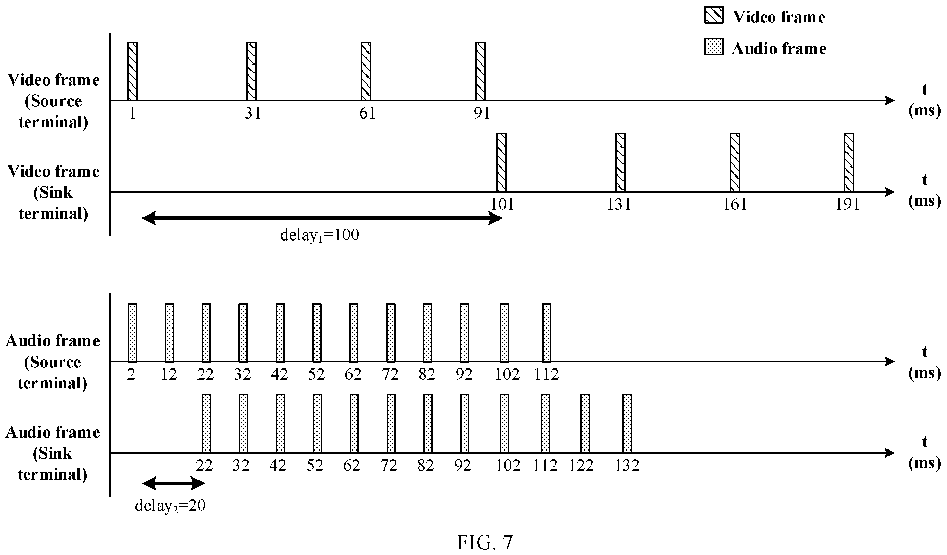

With reference to a diagram of an example of a relationship between the video delay and the audio delay shown in FIG. 7, the following provides a relational expression 1 for determining the audio interval by the sink terminal: queue₂=(|delay₁-delay₂|+δ₁T₁)/T₂.

In the relational expression 1, queue₂ is the audio interval, that is, a range of a quantity of audio frames in the audio queue.

delay₁ indicates the video delay, and delay₂ indicates the audio delay.

δ₁ is the difference between the maximum value (denoted as max₁) and the minimum value (denoted as min₁) of the video interval. Optionally, δ₁ is a value that dynamically changes. For example, a fluctuation range of δ₁ changes based on max₁ and/or min₁. For example, when min₁ is maintained within a first interval, the fluctuation range of d₁ is [0, 2], that is, a minimum value of δ₁ is 0, and a maximum value of δ₁ is 2. When min₁ is maintained within a second interval, the fluctuation range of δ₁ is [0, 5], that is, a minimum value of δ₁ is 0, and a maximum value of δ₁ is 5.

T₁ is the duration of the interval between the two adjacent video frames.

T₂ is the duration of the interval between the two adjacent audio frames.

The relational expression 1 is explained and described with reference to the example in FIG. 7.

For example, the video delay is 100 ms, and T₁ is 30 ms. The source terminal plays a 1^{st} video frame, a 2^{nd} video frame, a 3^{rd} video frame, and a 4^{th} video frame respectively at the 1^{st} ms, the 31^{st} ms, the 61^{st} ms, and the 91^{st} ms. The sink terminal plays the 1^{st} video frame, the 2^{nd} video frame, the 3^{rd} video frame, and the 4^{th} video frame respectively at the 101^{st} ms, the 13 1^{st} ms, the 161^{st} ms, and the 191^{st} ms.

The video delay is 20 ms, and T₂ is 10 ms. The source terminal plays a 1^{st} video frame, a 2^{nd} video frame, ..., an 11^{th} video frame, and a 12^{th} video frame respectively at the 2^{nd} ms, the 12^{nd} ms, ..., the 102^{nd} ms, and the 112^{nd} ms. The sink terminal plays the 1^{st} video frame, the 2^{nd} video frame, ..., the 11^{th} video frame, and the 12^{th} video frame respectively at the 22^{nd} ms, the 32^{nd} ms, ..., the 122^{nd} ms, and the 132^{nd} ms.

It may be considered that, when playing the 1^{st} video frame, the sink terminal further needs to play the 1^{st} audio frame to the 3^{rd} audio frame, and a start playing moment of the 1^{st} video frame is the same as a start playing moment of the 1^{st} audio frame; and when playing the 2^{nd} video frame, the sink terminal further needs to play the 4^{th} audio frame to the 6^{th} audio frame, and a start playing moment of the 2^{nd} video frame is the same as a start playing moment of the 4^{th} audio frame.

Because the video delay is greater than the audio delay, to ensure that the sink terminal plays the 1^{st} audio frame to the 3^{rd} audio frame when playing the 1^{st} video frame, the sink terminal may move the start playing moment of the 1^{st} audio frame backward by |delay₁-delay₂|. In other words, to ensure that the sink terminal plays an M₁^{th} audio frame to an M₂^{th} audio frame when playing an N^{th} video frame, the sink terminal needs to move a start playing moment of the M₁^{th} audio frame backward by |delay₁-delay₂|, that is, |delay₁-delay₂|/T₂ audio frames are further included before the M₁^{th} audio frame in the audio queue.

Further, because the quantity of video frames in the video queue is within the video interval, when the quantity of video frames fluctuates, that is, there may be δ₁ video frames before the N^{th} video frame in the video queue. In this way, there may be |delay₁-delay₂|+δ₁T₁)/T₂ audio frames before the M₁^{th} audio frame in the audio queue.

In this way, the length of the audio queue is |delay₁-delay₂|+δ₁T₁)/T₂. For example, |delay₁-delay₂|=80, T₁=30 ms, and T₂=10 ms. Further, when the fluctuation range of δ₁ is [0, 2], the length of the audio queue (that is, the audio interval) is [8, 14]; and when the fluctuation range of δ₁ is [0, 5], the length of the audio queue (that is, the audio interval) is [8, 23].

In a second possible manner, the video interval is determined based on the audio interval and the delay information.

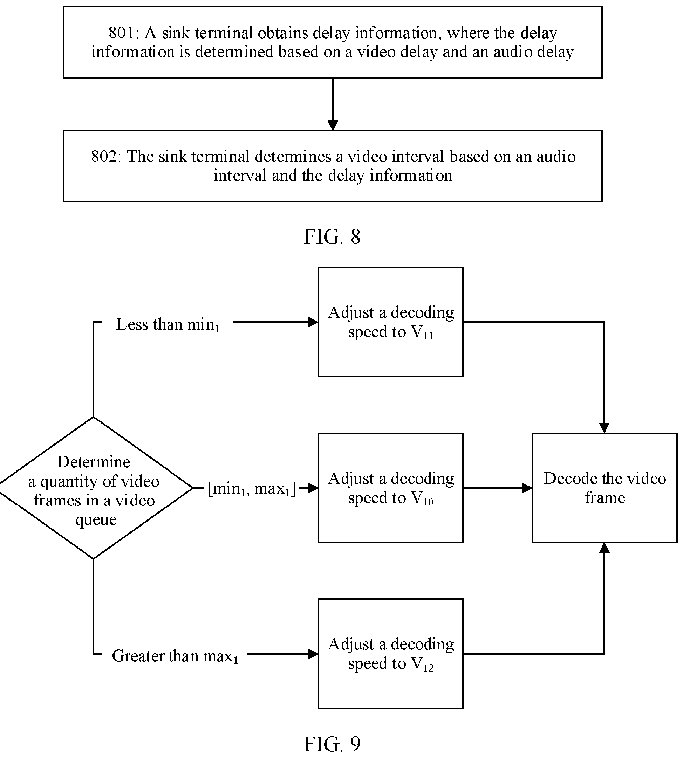

It may be considered that the sink terminal presets an audio interval, and then the sink terminal determines the video interval based on the audio interval and the delay information. For a specific implementation, refer to a flowchart shown in FIG. 8 as an example.

Step 801: The sink terminal obtains the delay information. The delay information is specifically determined based on the video delay and the audio delay. For a specific implementation, refer to the description in step 601.

Step 802: The sink terminal determines the video interval based on the audio interval and the delay information.

In a possible implementation, the sink terminal determines the video interval based on a fluctuation range of a difference between a maximum value and a minimum value of the audio interval, duration of an interval between two adj acent video frames, duration of an interval between two adjacent audio frames, and the delay information. The duration of the interval between the two adjacent video frames is a sampling interval of the source terminal for the video frame, for example, T1 is 33 ms. The duration of the interval between the two adjacent audio frames is a sampling interval of the source terminal for the audio frame, for example, T2 is 10 ms.

For example, the sink terminal determines the video interval according to a relational expression 2, where the relational expression 2: queue₁=(|delay₁-delay₂|+δ₂T₂)/T₁.

In the relational expression 1, queue₁ is the video interval, that is, a range of the quantity of video frames in the video queue.

delay₁ indicates the video delay, and delay₂ indicates the audio delay.

δ₂ is the difference between the maximum value (denoted as max₂) and the minimum value (denoted as min₂) of the audio interval. Optionally, δ₂ is a value that dynamically changes. For example, a fluctuation range of δ₂ changes based on max₂ and/or min₂. For example, when min₂ is maintained within a first interval, the fluctuation range of δ₂ is [0, 6], that is, a minimum value of δ₂ is 0, and a maximum value of δ₂ is 6. When min₂ is maintained within a second interval, a fluctuation range of δ₁ is [0, 15], that is, a minimum value of δ₂ is 0, and a maximum value of δ₂ is 15.

T₁ is the duration of the interval between two adjacent video frames.

T₂ is the duration of the interval between two adjacent audio frames.

For descriptions of the relational expression 2, refer to the descriptions of the relational expression 1. Details are not described again.

Optionally, the sink terminal may determine, based on a user indication, whether to use the first possible manner or the second possible manner to determine the video interval and the audio interval.

In a specific implementation, after receiving a projection connection request from the source terminal, the sink terminal displays an option 1 and an option 2 in a display interface of the sink terminal. The option 1 corresponds to the first possible manner, and the option 2 corresponds to the second possible manner. For example, in the display interface of the sink terminal, the option 1 is displayed as a "lossless image", and the option 2 is displayed as "lossless sound quality". Correspondingly, when a user selects the option 1, the sink terminal determines the video interval and the audio interval in the first possible manner; or when the user selects the option 2, the sink terminal determines the video interval and the audio interval in the second possible manner. In addition, in a process of projection from the source terminal to the sink terminal, the sink terminal may receive a switching indication from the user, and display the option 1 and the option 2 in the display interface of the sink terminal, so that the user can perform selection based on image display.

After determining the audio interval and the video interval, the sink terminal may control a decoding speed of decoding the video frame, for the quantity of video frames in the video queue to be maintained within the video interval, and control a decoding speed of decoding the audio frame, for the quantity of audio frames in the audio queue to be maintained within the audio interval.

That the sink terminal decodes the video frame includes: The sink terminal performs network decoding and/or video decoding on the video frame. That the sink terminal decodes the audio frame includes: The sink terminal performs network decoding and/or audio decoding on the audio frame.

There are still two cases for description:
Case 1: The audio interval is determined based on the video interval and the delay information.

When the sink terminal determines that the quantity of video frames in the video queue meets a first preset condition, the sink terminal reduces the decoding speed of the video frame; or when the sink terminal determines that the quantity of video frames in the video queue meets a second preset condition, the sink terminal increases the decoding speed of the video frame. The first preset condition is that the quantity of video frames in the video queue is less than the minimum value min₁ of the video interval, or the quantity of video frames in the video queue is less than or equal to the minimum value min₁ of the video interval; and the second preset condition is that the quantity of video frames in the video queue is greater than the maximum value max₁ of the video interval, or the quantity of video frames in the video queue is greater than or equal to the maximum value max₁ of the video interval. For ease of description, the following uses an example in which the first preset condition is that the quantity of video frames in the video queue is less than the minimum value min₁ of the video interval, and the second preset condition is that the quantity of video frames in the video queue is greater than the maximum value max₁ of the video interval.

For example, the sink terminal sets a normal decoding speed V₁₀, a slow decoding speed V₁₁, and a fast decoding speed V₁₂, where V₁₁=α₁V₁₀, α1∈(0, 1), V₁₂=β₁V₁₀, and β₁∈(1, ∞). Optionally, α₁ and β₁ are values that dynamically change. FIG. 9 is a diagram of adjusting a video decoding speed according to an example of this application. When the sink terminal determines that the quantity of video frames in the video queue is greater than the maximum value max₁ of the video interval, the sink terminal decodes the video frame in the video queue at V₁₂; when the sink terminal determines that the quantity of video frames in the video queue is less than the minimum value min₁ of the video interval, the sink terminal decodes the video frame in the video queue at V₁₁; or when the sink terminal determines that the quantity of video frames in the video queue is maintained within the video interval [min₁, max₁], the sink terminal decodes the video frames in the video queue at V₁₀.

When the sink terminal determines that the quantity of audio frames in the audio queue meets a third preset condition, the sink terminal reduces the decoding speed of the audio frame; or when the sink terminal determines that the quantity of audio frames in the audio queue meets a fourth preset condition, the sink terminal increases the decoding speed of the audio frame. The third preset condition is that the quantity of audio frames in the audio queue is less than the minimum value min₂ of the audio interval, or the quantity of audio frames in the audio queue is less than or equal to the minimum value min₂ of the audio interval; and/or the fourth preset condition is that the quantity of audio frames in the audio queue is greater than the maximum value max₂ of the audio interval, or the quantity of audio frames in the audio queue is greater than or equal to the maximum value max₂ of the audio interval. For ease of description, the following uses an example in which the third preset condition is that the quantity of audio frames in the audio queue is less than the minimum value min₂ of the audio interval, and the fourth preset condition is that the quantity of audio frames in the audio queue is greater than the maximum value max₂ of the audio interval.

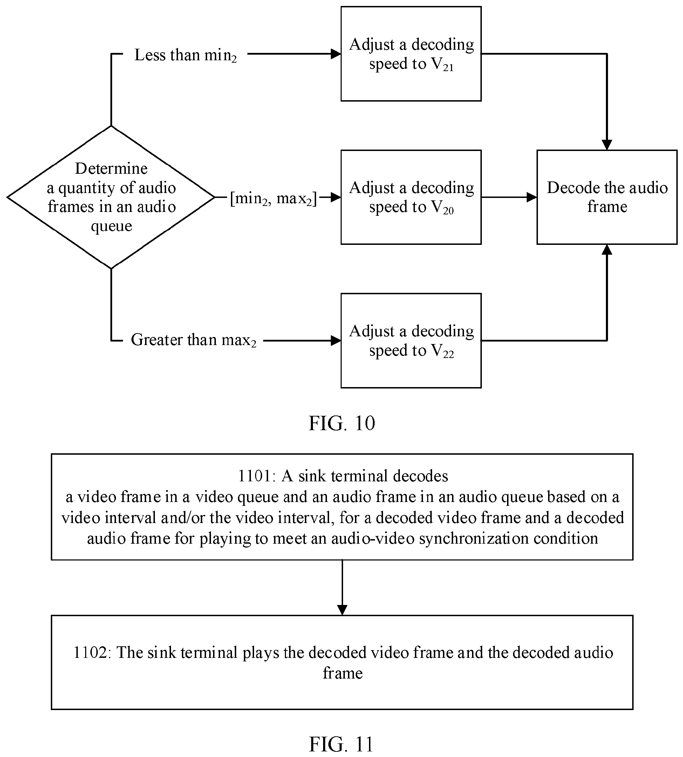

For example, the sink terminal sets a normal decoding speed V₂₀, a slow decoding speed V₂₁, and a fast decoding speed V₂₂, where V₂₁=α₂V₂₀, α2∈(0, 1), V₂₂=β₂V₂₀, and β₂∈(1, ∞). Optionally, α₂ and β₂ are values that dynamically change. FIG. 10 is a diagram of adjusting an audio decoding speed according to an example of this application. When the sink terminal determines that the quantity of audio frames in the audio queue is greater than the maximum value max₂ of the audio interval, the sink terminal decodes the audio frame in the audio queue at V₂₂; when the sink terminal determines that the quantity of audio frames in the audio queue is less than the minimum value min₂ of the audio interval, the sink terminal decodes the audio frame in the audio queue at V₂₁; or when the sink terminal determines that the quantity of audio frames in the audio queue is maintained within the audio interval [min₂, max₂], the sink terminal decodes the audio frames in the audio queue at V₂₀.

Case 2: The audio interval is determined based on the video interval and the delay information.

When the sink terminal determines that the quantity of video frames in the video queue meets a first preset condition, the sink terminal reduces the decoding speed of the video frame; or when the sink terminal determines that the quantity of video frames in the video queue meets a second preset condition, the sink terminal increases the decoding speed of the video frame. For a specific implementation, refer to the description in Case 1.

When the sink terminal determines that the quantity of audio frames in the audio queue meets a third preset condition, the sink terminal reduces the decoding speed of the audio frame; or when the sink terminal determines that the quantity of audio frames in the audio queue meets a fourth preset condition, the sink terminal increases the decoding speed of the audio frame. For a specific implementation, refer to the description in Case 1.

It should be supplemented that, in Case 1, when the sink terminal determines that the quantity of audio frames in the audio queue meets a third preset condition, the sink terminal may further temporarily stop decoding the audio frame in the audio queue; or when the sink terminal determines that the quantity of audio frames in the audio queue meets a fourth preset condition, the sink terminal may further discard one or more audio frames in the audio queue. Certainly, the sink terminal may further increase the decoding speed of the audio frame while discarding the one or more audio frames in the audio queue. In Case 2, when the sink terminal determines that the quantity of video frames in the video queue meets the first preset condition, the sink terminal may further temporarily stop decoding the video frames in the video queue; or when the sink terminal determines that the quantity of video frames in the video queue meets the second preset condition, the sink terminal may further discard one or more video frames in the video queue. Certainly, the sink terminal may further increase the decoding speed of the video frame while discarding the one or more video frames in the video queue.

Then, the sink terminal plays a video and audio based on the procedure of the projection method shown in FIG. 11 as an example, to implement audio-video synchronization.

Step 1101: The sink terminal decodes the video frame in the video queue and the audio frame in the audio queue based on the video interval and/or the video interval.

It may be understood that, in a projection process, the sink terminal controls the decoding speed of the video frame based on the video interval, for a quantity of video frames that are from the source terminal and that are buffered in the video queue to be maintained within the video interval. For descriptions of the video queue and the video interval, refer to descriptions in the embodiments related to FIG. 6 to FIG. 10. The sink terminal controls the decoding speed of the audio frame based on the audio interval, so that a quantity of audio frames that are from the source terminal and that are buffered in the audio queue is maintained within the audio interval, and a decoded video frame and a decoded audio frame for playing meet an audio-video synchronization condition. For descriptions of the audio queue and the audio interval, refer to the descriptions in the embodiments related to FIG. 6 to FIG. 10.

Then, the sink terminal obtains a target video frame from the video queue at the sink terminal. The target video frame is a video frame that is located at the head of the video queue. The sink terminal obtains a target audio frame from the audio queue at the sink terminal. The target audio frame is an audio frame that is located at the head of the audio queue. The sink terminal decodes the target video frame and the target audio frame. For description of decoding the target video frame and the target audio frame by the sink terminal, refer to the description in the embodiment related to FIG. 3.

Step 1102: The sink terminal plays the decoded video frame and the decoded audio frame.

The audio-video synchronization condition may be specifically that, for a video frame and an audio frame that are synchronously played at the source terminal, when the video frame and the audio frame are played at the sink terminal, a difference between start playing moments of the video frame and the audio frame is less than a threshold. For example, the source terminal synchronously plays a video frame A and an audio frame B (that is, a start playing moment at which the source terminal plays the video frame A is the same as a start playing moment at which the source terminal plays the audio frame B). When a difference between a start playing moment at which the sink terminal plays the video frame A (that is, the target video frame) and a start playing moment at which the sink terminal plays the audio frame B (that is, the target audio frame) is less than the threshold, it indicates that the audio-to-video synchronization condition is met when the sink terminal plays the target video frame and the target audio frame, that is, audio-to-video synchronization is implemented.

For example, when the audio interval is determined based on the video interval and the delay information, the threshold (denoted as a first threshold) is determined based on the duration T₁ of the interval between two adjacent video frames and the difference δ₁ between the maximum value and the minimum value of the video interval. For example, the first threshold is equal to a product of T₁ and δ₁.

For another example, when the video interval is determined based on the audio interval and the delay information, the threshold (denoted as a second threshold) is determined based on the duration T₂ of the interval between two adjacent audio frames and the difference δ₂ between the maximum value and the minimum value of the audio interval. For example, the second threshold is equal to a product of T₂ and δ₂.

It may be understood that the projection method in this application is a dynamic adjustment process. When determining to start projection, the sink terminal may preliminarily determine the video interval and the audio interval based on the steps in the embodiment related to FIG. 6 or FIG. 8. Further, when the audio interval is determined based on the video interval and the delay information, the sink terminal dynamically adjusts min₁, max₁, δ₁, α₁, and β₁, so that the audio delay and the video delay are reduced on a premise of audio-video synchronization. When the video interval is determined based on the audio interval and the delay information, the sink terminal dynamically adjusts min₂, max₂, δ₂, α₂, and β₂, so that the audio delay and the video delay are reduced on a premise of audio-video synchronization.

In the foregoing technical solution, the sink terminal can implement audio-video synchronization without depending on a time stamp marked by the source terminal. This helps improve flexibility and accuracy of implementing audio-video synchronization. Further, when the audio interval is determined based on the video interval and the delay information, the sink terminal sequentially decodes each video frame in the video queue, which helps ensure that video played at the sink terminal is smoother. In addition, when the sink terminal adjusts the quantity of audio frames in the audio queue, an adjustment granularity is small, which helps implement better audio-video effect. When the video interval is determined based on the audio interval and the delay information, the sink terminal sequentially decodes each audio frame in the audio queue, which helps implement continuity of audio played at the sink terminal. In addition, a video frame is buffered in the video queue at the sink terminal, and an audio frame is buffered in the audio queue at the sink terminal, which helps to play audio and a video more smoothly and avoid a frame freezing problem.

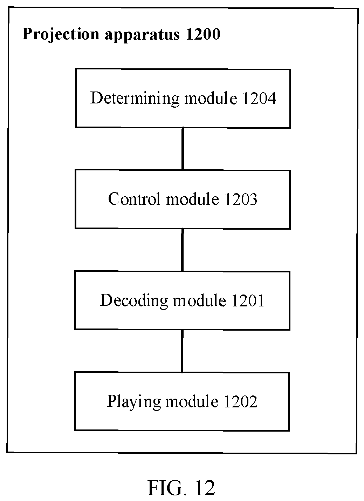

Based on the foregoing content and a same concept, FIG. 12 is a diagram of a structure of a possible projection apparatus 1200 according to this application. The projection apparatus 1200 is used for a scenario in which a source terminal projects a video frame and an audio frame to a sink terminal. The sink terminal includes the projection apparatus 1200, or the sink terminal is the projection apparatus 1200. The projection apparatus 1200 may be configured to implement functions of the sink terminal in the foregoing method embodiments, and therefore can also implement beneficial effect of the foregoing method embodiments.

The projection apparatus 1200 includes: a decoding module 1201, configured to decode a video frame in a video queue and an audio frame in an audio queue based on a video interval and/or the video interval, for a decoded video frame and a decoded audio frame for playing to meet an audio-video synchronization condition; and a playing module 1202, configured to play the decoded video frame and the decoded audio frame.

A quantity of video frames that are from the source terminal and that are buffered in the video queue is maintained within the video interval, and a quantity of audio frames that are from the source terminal and that are buffered in the audio queue is maintained within the audio interval. The audio interval is determined based on the video interval and delay information, or the video interval is determined based on the audio interval and delay information. The delay information is determined based on the video delay and the audio delay. The video delay is a difference between times at which the source terminal and the sink terminal play a same video frame, and the audio delay is a difference between times at which the source terminal and the sink terminal play a same audio frame.

In a possible implementation, the projection apparatus 1200 further includes a control module 1203. The control module 1203 is configured to: control a decoding speed of the video frame, for a quantity of video frames in the video queue to be maintained within the video interval; and/or control a decoding speed of the audio frame, for a quantity of audio frames in the audio queue to be maintained within the audio interval.

In a possible implementation, the audio interval is determined based on the video interval and the delay information.

In a possible example, if determining that the quantity of video frames in the video queue meets a first preset condition, the control module 1203 reduces the decoding speed of the video frame; and/or if determining that the quantity of video frames in the video queue meets a second preset condition, the control module 1203 increases the decoding speed of the video frame. In a possible example, if determining that the quantity of audio frames in the audio queue meets a third preset condition, the control module 1203 reduces the decoding speed of the audio frame, or temporarily stops decoding the audio frame; and/or if determining that the quantity of audio frames in the audio queue meets a fourth preset condition, the control module 1203 increases the decoding speed of the audio frame, or discards one or more audio frames in the audio queue.

In a possible example, the projection apparatus 1200 further includes a determining module 1204, and the determining module 1204 is configured to determine the audio interval based on the video interval and the delay information. In a possible example, the determining module 1204 is specifically configured to determine the audio interval based on a fluctuation range of a difference between a maximum value and a minimum value of the video interval, duration of an interval between two adjacent video frames, duration of an interval between two adjacent audio frames, and the delay information.

In a possible example, the audio-video synchronization condition includes that a difference between start playing moments of an audio frame and a video frame that are synchronously played at the source terminal and that are separately played at the sink terminal is less than a first threshold. The first threshold is determined based on the duration of the interval between two adjacent video frames.

In a possible implementation, the video interval is determined based on the audio interval and the delay information.

In a possible example, the projection apparatus 1200 further includes a control module 1203. The control module 1203 is configured to: if it is determined that the quantity of video frames in the video queue meets a first preset condition, reduce the decoding speed of the video frame, or temporarily stop decoding the video frame; and/or if it is determined that the quantity of video frames in the video queue meets a second preset condition, increase the decoding speed of the video frame, or discard one or more video frames in the video queue. In a possible example, if determining that the quantity of audio frames in the audio queue meets a third preset condition, the control module 1203 reduces the decoding speed of the audio frame; and/or if determining that the quantity of audio frames in the audio queue meets a fourth preset condition, the control module 1203 increases the decoding speed of the audio frame.

In a possible example, the projection apparatus 1200 further includes a determining module 1204, and the determining module 1204 is configured to determine the video interval based on the audio interval and the delay information. In a possible example, the determining module 1204 is specifically configured to determine the video interval based on a fluctuation range of a difference between a maximum value and a minimum value of the audio interval, duration of an interval between two adjacent video frames, duration of an interval between two adjacent audio frames, and the delay information.

In a possible example, the audio-video synchronization condition includes that a difference between start playing moments of an audio frame and a video frame that are synchronously played at the source terminal and that are separately played at the sink terminal is less than a second threshold. The second threshold is determined based on the duration of the interval between two adjacent audio frames.

In a possible implementation, the projection apparatus 1200 further includes a determining module 1204. Before the decoding module 1201 decodes the video frame in the video queue and the audio frame in the audio queue based on the video interval and/or the video interval, the determining module 1204 is configured to: collect the video delay and the audio delay; and use a difference between the video delay and the audio delay as the delay information.

Based on the foregoing content and a same concept, this application provides a computing device, including a processor and a memory. The memory is configured to store a computer program, and the processor is configured to execute the computer program stored in the memory, so that the computing device is enabled to perform the steps performed by the sink terminal in the foregoing method embodiments.

Based on the foregoing content and a same concept, this application provides a computer-readable storage medium. The computer-readable storage medium stores a computer program or instructions. When the computer program or the instructions are executed by a computing device, the computing device performs the steps performed by the sink terminal in the foregoing method embodiments.

Based on the foregoing content and a same concept, this application provides a computer program product. The computer program product includes a computer program or instructions. When the computer program or the instructions are executed by a computing device, the computing device performs the steps performed by the sink terminal in the foregoing method embodiments.

Based on the foregoing content and a same concept, this application provides a projection system, including a source terminal and a sink terminal. The source terminal is configured to send a video frame and an audio frame to the sink terminal. The sink terminal performs the steps in the foregoing method embodiments.

In this application, "at least one" means one or more, and "a plurality of" means two or more. "At least one of the following items (pieces)" or a similar expression thereof indicates any combination of these items, including a single item (piece) or any combination of a plurality of items (pieces). For example, at least one item (piece) of a, b, or c may indicate a, b, c, "a and b", "a and c", "b and c", or "a, b, and c", where a, b, and c may be singular or plural. The term "and/or" describes an association relationship between associated objects, and indicates that three relationships may exist. For example, A and/or B may indicate the following cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A projection method, applied to a scenario in which a source terminal projects a video frame and an audio frame to a sink terminal, wherein the method is performed by the sink terminal, and the method comprises:
decoding a video frame in a video queue and an audio frame in an audio queue based on a video interval and/or the video interval, for a decoded video frame and a decoded audio frame for playing to meet an audio-video synchronization condition; and
playing the decoded video frame and the decoded audio frame, wherein
a quantity of video frames that are from the source terminal and that are buffered in the video queue is maintained within the video interval, and a quantity of audio frames that are from the source terminal and that are buffered in the audio queue is maintained within the audio interval;
the audio interval is determined based on the video interval and delay information, or the video interval is determined based on the audio interval and delay information; and
the delay information is determined based on a video delay and an audio delay, the video delay is a difference between times at which the source terminal and the sink terminal play a same video frame, and the audio delay is a difference between times at which the source terminal and the sink terminal play a same audio frame.

2. The method according to claim 1, further comprising:
controlling a decoding speed of the video frame, for the quantity of video frames in the video queue to be maintained within the video interval; and/or
controlling a decoding speed of the audio frame, for the quantity of audio frames in the audio queue to be maintained within the audio interval.

3. The method according to claim 1, wherein the audio interval is determined based on the video interval and the delay information, and the method further comprises:
if it is determined that the quantity of video frames in the video queue meets a first preset condition, reducing a decoding speed of the video frame;
and/or
if it is determined that the quantity of video frames in the video queue meets a second preset condition, increasing a decoding speed of the video frame.

4. The method according to claim 1, wherein the audio interval is determined based on the video interval and the delay information, and the method further comprises:
if it is determined that the quantity of audio frames in the audio queue meets a third preset condition, reducing a decoding speed of the audio frame, or temporarily stopping decoding the audio frame; and/or
if it is determined that the quantity of audio frames in the audio queue meets a fourth preset condition, increasing a decoding speed of the audio frame, or discarding one or more audio frames in the audio queue.

5. The method according to claim 1, wherein the audio interval is determined based on the video interval and the delay information, and the method further comprises:
determining the audio interval based on a fluctuation range of a difference between a maximum value and a minimum value of the video interval, duration of an interval between two adjacent video frames, duration of an interval between two adjacent audio frames, and the delay information.

6. The method according to claim 1, wherein before the decoding a video frame in a video queue and an audio frame in an audio queue based on a video interval and/or the video interval, the method further comprises:
collecting the video delay and the audio delay; and
using a difference between the video delay and the audio delay as the delay information.

7. The method according to claim 1, wherein
when the audio interval is determined based on the video interval and the delay information, the audio-video synchronization condition comprises that a difference between start playing moments of an audio frame and a video frame that are synchronously played at the source terminal and that are separately played at the sink terminal is less than a first threshold, and the first threshold is determined based on duration of an interval between two adjacent video frames; and/or
when the video interval is determined based on the audio interval and the delay information, the audio-video synchronization condition comprises that a difference between start playing moments of an audio frame and a video frame that are synchronously played at the source terminal and that are separately played at the sink terminal is less than a second threshold, and the second threshold is determined based on duration of an interval between two adjacent audio frames.

8. A projection apparatus, used for a scenario in which a source terminal projects a video frame and an audio frame to a sink terminal, wherein the sink terminal comprises the projection apparatus, and the projection apparatus comprises:
a decoding module, configured to decode a video frame in a video queue and an audio frame in an audio queue based on a video interval and/or the video interval, for a decoded video frame and a decoded audio frame for playing to meet an audio-video synchronization condition; and
a playing module, configured to play the decoded video frame and the decoded audio frame, wherein
a quantity of video frames that are from the source terminal and that are buffered in the video queue is maintained within the video interval, and a quantity of audio frames that are from the source terminal and that are buffered in the audio queue is maintained within the audio interval;
the audio interval is determined based on the video interval and delay information, or the video interval is determined based on the audio interval and delay information; and
the delay information is determined based on a video delay and an audio delay, the video delay is a difference between times at which the source terminal and the sink terminal play a same video frame, and the audio delay is a difference between times at which the source terminal and the sink terminal play a same audio frame.

9. The apparatus according to claim 8, further comprising a control module, wherein
the control module is configured to:
control a decoding speed of the video frame, for the quantity of video frames in the video queue to be maintained within the video interval;
and/or
control a decoding speed of the audio frame, for the quantity of audio frames in the audio queue to be maintained within the audio interval.

10. The apparatus according to claim 8, further comprising a control module, wherein
when the audio interval is determined based on the video interval and the delay information, the control module is configured to:
if it is determined that the quantity of video frames in the video queue meets a first preset condition, reduce a decoding speed of the video frame;
and/or
if it is determined that the quantity of video frames in the video queue meets a second preset condition, increase a decoding speed of the video frame.

11. The apparatus according to claim 8, further comprising a control module, wherein
when the audio interval is determined based on the video interval and the delay information, the control module is configured to:
if it is determined that the quantity of audio frames in the audio queue meets a third preset condition, reduce a decoding speed of the audio frame, or temporarily stop decoding the audio frame; and/or
if it is determined that the quantity of audio frames in the audio queue meets a fourth preset condition, increase a decoding speed of the audio frame, or discard one or more audio frames in the audio queue.

12. The apparatus according to claim 8, further comprising a determining module, wherein
when the audio interval is determined based on the video interval and the delay information, the determining module is configured to:
determine the audio interval based on a fluctuation range of a difference between a maximum value and a minimum value of the video interval, duration of an interval between two adjacent video frames, duration of an interval between two adjacent audio frames, and the delay information.

13. The apparatus according to claim 8, further comprising a determining module, wherein before the decoding module decodes the video frame in the video queue and the audio frame in the audio queue based on the video interval and/or the video interval, the determining module is configured to:
collect the video delay and the audio delay; and
use a difference between the video delay and the audio delay as the delay information.

14. The apparatus according to claim 8, wherein
when the audio interval is determined based on the video interval and the delay information, the audio-video synchronization condition comprises that a difference between start playing moments of an audio frame and a video frame that are synchronously played at the source terminal and that are separately played at the sink terminal is less than a first threshold, and the first threshold is determined based on duration of an interval between two adjacent video frames; and/or
when the video interval is determined based on the audio interval and the delay information, the audio-video synchronization condition comprises that a difference between start playing moments of an audio frame and a video frame that are synchronously played at the source terminal and that are separately played at the sink terminal is less than a second threshold, and the second threshold is determined based on duration of an interval between two adjacent audio frames.

15. A computing device, comprising a processor and a memory, wherein the memory is configured to store a computer program, and the processor is configured to execute the computer program stored in the memory, so that the computing device is enabled to perform the method according to any one of claims 1 to 7.

16. A computer-readable storage medium, wherein the computer-readable storage medium stores a computer program or instructions, and when the computer program or the instructions are executed by a computing device, the computing device implements the method according to any one of claims 1 to 7.

17. A projection system, comprising:
a source terminal and a sink terminal, wherein
the source terminal is configured to send a video frame and an audio frame to the sink terminal; and
the sink terminal is configured to perform the method according to any one of claims 1 to 7.
